# EUROPEAN PATENT APPLICATION

(11) **EP 0 600 566 A1**
(43) Date of publication of application: **08.06.1994**
(21) Application number: 93203367.3
(22) Date of filing: 01.12.1993
(51) Int. Cl.: A22C 9/00

(54) **Composite-movement machine for processing meat products**

(30) Priority: 04.12.1992 IT MI922780
(71) Applicant: Possenti, Giovan Battista, I-22053 Lecco (Como) (IT)
(72) Inventor: Possenti, Giovan Battista, I-22053 Lecco (Como) (IT)
(74) Representative: Faraggiana, Vittorio, Dr. Ing.

(57) **Abstract**

A meat processing machine comprises a container (14) having at least one main body substantially in the form of a rotation solid, pivotally mounted according to one axis (15) coinciding with the rotation axis of the solid and according to a second horizontal axis (12) oriented perpendicular to the first one.

Movement means (17, 19) drives the container (14) in rotation about the first axis (15) and makes it oscillate about the second axis (12) relative to a substantially horizontal position of the first axis (15).

## Description

In the known art, salting of meat products, such as bacon, ham, smoked ham, some types of sausages, etc., is obtained by effect of mechanical massages produced on the meat by an appropriate machine. This machine generally consists of an axially-rotating horizontal cylindrical container into which meat is introduced together with salt and spices, if necessary. The time required for a complete salting is however long and the final salting is not always sufficiently homogeneous, which produces streaks and abnormal colours in the mass of the processed meat.

In addition, generally meat is evacuated by means of a screw fitted in the cylinder so that rotation of the cylinder itself pushes the meat towards an outlet end thereof.

The mechanical stresses to which meat is submitted are however particularly important and produce frayings in the muscular masses which may bring about a separation in the meat portions and damages impairing the quality of the product.

The general object of the present invention is to eliminate the above drawbacks by providing a machine for meat processing which enables an excellent result to be achieved in short periods of time and without any danger of damaging the product, and also enabling the product evacuation without too many stresses.

In view of the above object, in accordance with the invention a machine for processing meat products has been devised which comprises a container having at least one main body substantially in the form of a rotation solid, pivotally mounted according to one axis coinciding with the rotation axis of the solid and according to a second horizontal axis directed perpendicular to the first axis, movement means being provided for controlling a rotation of the container about the first axis and a rocking movement of the container about the second axis relative to a substantially horizontal position of the first axis.

For better explaining the innovatory principles of the present invention and the advantages it offers over the known art, a possible embodiment of the invention applying said innovatory principles will be given hereinafter by way of non-limiting example with the aid of the accompanying drawings, in which:
- Fig. 1 is a diagrammatic elevational side view of a machine according to the invention in a raised evacuation position;
- Fig. 2 an elevational front view of the machine shown in Fig. 1;
- Fig. 3 is a diagrammatic elevational side view of the machine seen in Fig. 1 in an operating position.

Referring to the drawings, a machine in accordance with the invention generally identified by reference numeral 10, comprises a container 14, having at least one main body in the form of a rotation solid (of cylindrical shape, for example), which, in an innovatory manner, is such supported that it can be rotated about one axis 15 of rotation of the solid and tilted about a second rocking axis 12 disposed horizontally and perpendicular to the first axis 15.

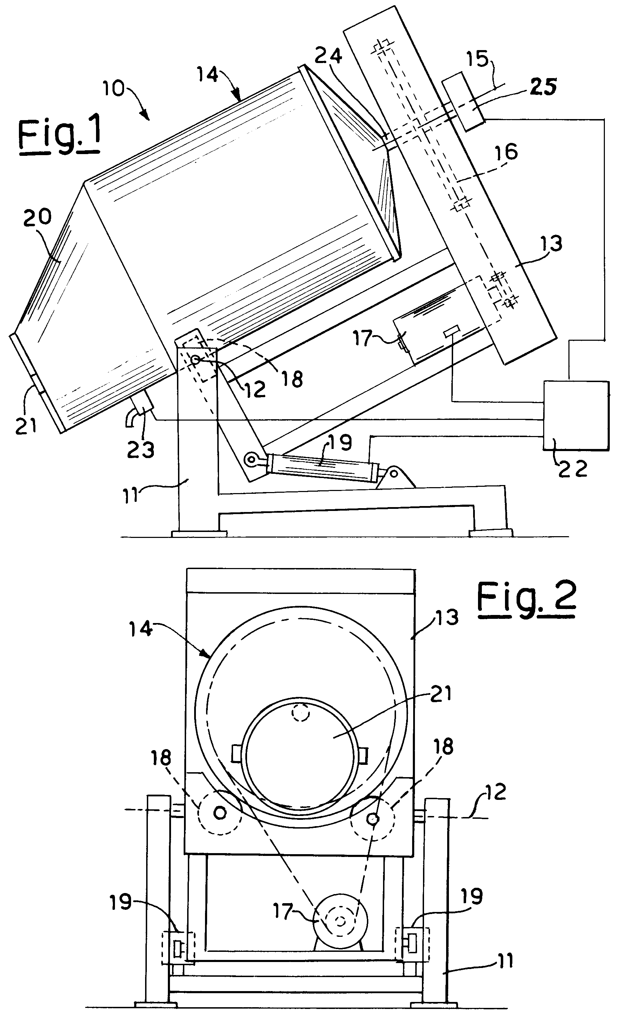

For achievement of the above movements, a base 11 has been provided on which a framework 13 is pivotally mounted according to the horizontal rocking axis 12, for supporting the container so that it may rotate about the axis 15 by means of an axial shaft 24 located at one end of the container. In addition to being supported by the shaft 24, the container also has its cylindrical peripheral wall resting on a pair of wheels 18 having their axis parallel to the rotation axis 15, as better shown in Fig. 2.

Movement means controls the container's movements about axes 12 and 15. In particular, the container is rotated about axis 15 by means of a transmission gear 16 operated by an electric motor 17, whereas the framework 13 is oscillated about axis 12 by means of pneumatic actuators 19 located between the framework and base.

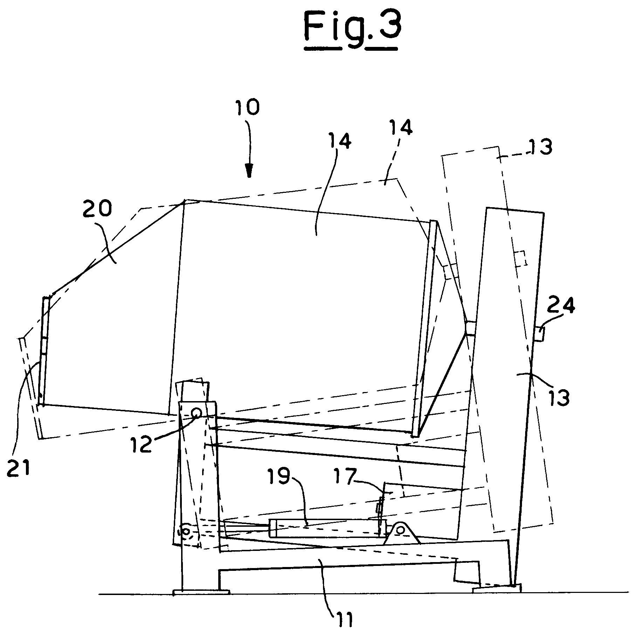

Operation of motor 17 and actuators 19 is controlled by a control device 22, for example embodied by a known microprocessor circuit for programming both the speed and direction of the rotation movement and the speed and amplitude of the rocking movement. In particular, actuators 19 can be operated for producing a rocking movement about the horizontal position of the axis 15 between a lowered position (shown in solid line in Fig. 3) and a raised position (shown in chain line in Fig. 3).

Said rocking movement has been found advantageous to be in the range between ± 10° and ±20°, in particular corresponding to ± 15° to the horizontal.

At the axial end, on the other side from the shaft 24, the container 14 terminates with a portion 20 tapering towards one opening or access door 21 to the container.

On reception of an evacuation signal, the actuating means 19 may be also operated so as to greatly tilt the container about the second axis 12 in order to bring the opening 21 thereof downwardly, thereby producing the evacuation of the meat by fall from the container through the opening 21.

According to the known art, the container may be maintained under a vacuum condition for carrying out the known process under vacuum.

In use, after the meat has been closed within the container and salt and spices, if any, have been introduced thereinto, the control device 22 operates cyclical and timed rotations and rocking movements between the lowered and intermediate raised positions. In this manner, a continuous stirring of the meat within the container is carried out in three different directions.

This stirring has been found to greatly improve the uniform distribution of salting and also remarkably improve the salt penetration towards the meat core. The use of a device for the automatic insertion at intervals and according to predetermined batches of spices and salt may be also provided, which device is generally denoted by 25 in Fig. 1 and is as described in the co-pending Italian patent application in the name of the same Applicant.

As compared to the machines of the known art, an improvement in the quality of the finished product is achieved, which product is devoid of streaks and abnormal colours in the mass by virtue of a more rapid and homogeneous colour fixation. In addition salting times are reduced, which involves a reduction in the processing costs.

When the salting process has been completed, it is sufficient to open the door 21 and operate the device 22 so that the actuators bring the container to the evacuation position of Fig. 1. The container's high inclination (for example greater than 20°, in particular in the order of 30° and beyond) produces a sliding movement of the meat through the door opening, without the occurrence of fraying stresses which are typical of the discharge methods of the known art. Sliding is assisted by the innovatory inclined frusto-conical shape of the portion 20 which is oriented downwardly.

Advantageously, before the meat discarging operation it is possible to operate a valve 23 for completely evacuating the liquids formed during salting.

At this point it is apparent that the intended objects have been achieved by providing a machine that, by combining two distinct movements enables an excellent and quick salting without unacceptable stresses on the meat mass and also ensures a quick discharge of the meat without any shocks.

Obviously, the above description of an embodiment applying the innovatory principles of the present invention is given for purposes of illustration only and therefore must not be considered as a limitation of the scope of the invention as herein claimed. For example, the exact shapes of the framework, base and container may vary depending on the particular practical requirements and the amount of meat to be processed. The main body of the container may be a rotation solid of a different shape than the cylindrical one and it may be for example in the form of a barrel. Finally, the axial rotation of the container may be operated through powering of the support rollers instead of the end shaft.

## Claims

1. A machine (10) for processing meat products comprising a container (14) having at least one main body substantially in the form of a rotation solid, pivotally mounted according to one axis (15) coinciding with the rotation axis of the solid and according to a second horizontal axis (12) directed perpendicular to the first axis, movement means (17, 19) being provided for controlling the rotation of the container (14) about the first axis (15) and a rocking movement of the container (14) about the second axis (12) at an inclination relative to a substantially horizontal position of the first axis (15).

2. A machine according to claim 1, characterized in that the container (14) comprises a discharge opening (21) disposed at an axial end thereof, so that the movement means (19), on reception of a discharge signal, operates the inclination of the container (14) about the second axis (12) to move the opening (21) thereof downwardly, in order to produce the discharge of the meat from the container (14), by fall, through the opening (21).

3. A machine according to claim 1, characterized in that for its rotation about the first axis (15) the container (14) is axially supported at one end thereof by a rotary shaft (24), a peripheral wall thereof resting on a pair of rolling wheels (18).

4. A machine according to claim 3, characterized in that the rotary shaft (24) and rolling wheels (18) are in turn supported by a framework (13) pivotally mounted, according to the second axis (12), to a fixed base (11) for carrying out the rocking movement.

5. A machine according to claim 4, characterized in that the movement means comprises linear thrust actuators (19) between the framework (13) and base (11) for causing oscillation of the framework (13) about the second axis (12).

6. A machine according to claim 3, characterized in that the movement means comprises a drive motor (17) kinematically connected to the rotary shaft (24).

7. A machine according to claim 1, characterized in that the container (14) comprises valve means (23) operable for evacuating the liquid from the container.

8. A machine according to claim 2, characterized in that the container (14) has a tapering end portion (20) terminating with the discharge opening (21).

9. A machine according to claim 1, characterized in that the movement means (17, 19) is connected to a control device (22) for the programmed and timed execution of said rotation and rocking movements by the container (14).

10. A machine according to claim 1, characterized in that the main body of the container (14) is of cylindrical form.

11. A machine according to claim 1, characterized in that the inclination of the rocking movement is included between ± 10° and ±20°, being in particular ±15°.

12. A machine according to claim 2, characterized in that the discharge inclination is greater than 20°, in particular greater than or equal to 30°.

13. A machine according to claim 8, characterized in that the tapering portion (20) is of inclined truncated conical form.
